(19) **Europäisches Patentamt**
**European Patent Office**
**Office européen des brevets**

(11) **EP 3 048 021 B1**

(12) **EUROPEAN PATENT SPECIFICATION**

(45) Date of publication and mention
of the grant of the patent:
**30.08.2017 Bulletin 2017/35**

(51) Int Cl.:
***B60W 30/09*** *(2012.01)*  ***B60W 30/095*** *(2012.01)*
***B60W 50/00*** *(2006.01)*

(21) Application number: **16152754.4**

(22) Date of filing: **26.01.2016**

(54) **VEHICLE TRAVELLING CONTROL DEVICE**

VORRICHTUNG ZUR STEUERUNG DER FAHRZEUGFORTBEWEGUNG

DISPOSITIF DE COMMANDE DE DÉPLACEMENT DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2015 JP 2015011935**

(43) Date of publication of application:
**27.07.2016 Bulletin 2016/30**

(73) Proprietor: **Hitachi, Ltd.**
**Tokyo 100-8280 (JP)**

(72) Inventors:
• **MAEDA, Kenta**
**Tokyo, 100-8280 (JP)**

• **YOKOYAMA, Atsushi**
**Tokyo, 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 133 851       WO-A1-2014/192370
DE-A1-102011 113 019   DE-A1-102012 009 297**

**Description**

BACKGROUND OF THE INVENTION

1. Field of the Invention

The present invention relates to a vehicle travelling control device that avoids an own vehicle and a moving object from colliding with each other.

2. Description of the Related Art

Conventionally, a driving support device and a vehicle travelling control device to prevent a moving object such as a walker and a bicycle at an intersection point from colliding with an own vehicle in advance and secure safety and a sense of security of an occupant are known. For example, a method for detecting a moving object moving to a crosswalk and giving collision avoidance support on the basis of an arrival time difference to a point where the own vehicle and the moving object intersect is disclosed in JP-2014-093040-A. In addition, driving support to detect an environment change causing a speed change of a moving object and notify a driver of a walker whose speed is changed by the environment change is disclosed in JP-4967015-B.

SUMMARY OF THE INVENTION

In the method disclosed in JP-2014-093040-A, the arrival time difference is calculated and a travelling plan of the own vehicle is made, on the assumption that a current speed of the walker is constant in the future. However, when the speed of the walker is changed by a certain factor, a risk of collision may occur in travelling according to the travelling plan and the sense of security of the occupant may be undermined by performing emergency braking to avoid the collision.
Meanwhile, in JP-4967015-B, a warning is given to a driver after the environment change to be the speed change factor of the walker is acquired. For this reason, when this device is applied to automatic driving, the modification of the travelling plan may be delayed, which may result in depending on the emergency braking.
Accordingly, the present invention has been made in view of the above circumstances and an object of the present invention is to raise a sense of security of an occupant by predicting a future speed change of a walker, changing a travelling plan in advance, and providing the travelling plan to the occupant.
An aspect of the present invention provides a vehicle travelling control device. The vehicle travelling control device includes a target travelling track generation unit which generates a target travelling track of an own vehicle from road information of a surrounding area of the own vehicle; a track intersection determination unit which determines whether a prediction track of a moving object around the own vehicle and the target travelling track intersect; a travelling plan unit which plans a speed and a travelling track of the own vehicle based on the track intersection determination unit; an environment change prediction unit which acquires current signal information, attributes of the moving object, a road shape, and at least one of a position relation of the other moving object using cameras, predicts a future change of the signal information using the cameras or acquires the future change using communication, and predicts a future environment change causing a speed change of the moving object; a maximum speed estimation unit which estimates a maximum speed of the moving object, on the basis of the attributes of the moving object; and a speed change prediction unit which predicts that the moving object moves at the maximum speed from a point of time of the environment change, when the moving object moves at the maximum speed from the point of time of the environment change and a reachable range is equal to or more than a specific ratio of a road width at an intersection point with the own vehicle until an intersection prohibition time with the own vehicle, and predicts that a movement speed of the moving object decreases or the moving object stops from the point of time of the environment change, when the reachable range is not equal to or more than the specific ratio. The travelling plan unit performs modification of a travelling plan changing at least one of the speed and the travelling track of the own vehicle, when a collision of the own vehicle and the moving object is predicted on the basis of information predicted by the speed change prediction unit, and determines command values of a steering angle and acceleration and deceleration, on the basis of the travelling plan and own vehicle information.
According to the present invention, an environment change in which a signal for a walker changes from blue display to blue flickering display at an intersection point, causing running of a walker, can be predicted in advance and a travelling plan can be changed in advance. Therefore, a change of the travelling plan with emergency braking can be suppressed, a sense of security of an occupant can be raised, and a sense of insecurity for a following vehicle can be reduced. In addition, travelling according to the travelling plan can be realized by displaying information to the occupant and a sense of discomfort or a sense of insecurity of the occupant due to a difference with the travelling plan assumed by the occupant can be suppressed by providing prediction content of the detected moving object.

BRIEF DESCRIPTION OF THE DRAWINGS

Fig. 1 is a diagram illustrating an entire configuration of a vehicle on which a vehicle travelling control device 1 is mounted;

Fig. 2 is a block diagram illustrating a configuration according to a first embodiment of the vehicle travelling control device 1;

Fig. 3 is a diagram illustrating an example of a future signal information acquisition method;

Fig. 4 is a block diagram illustrating a configuration according to a first embodiment of a travelling control unit 30;

Fig. 5 is a diagram illustrating a definition of each variable at the time of calculating an arrival time;

Fig. 6 is a diagram illustrating a system flow according to the first embodiment of the travelling control unit 30;

Fig. 7 is a diagram illustrating a system flow according to a first embodiment of a travelling plan unit 28;

Fig. 8 is a diagram illustrating a vehicle behavior according to the related art (environment 1);

Fig. 9 is a diagram illustrating a vehicle behavior according to a first embodiment of the present invention (environment 1);

Figs. 10A and 10B are diagrams illustrating an example of a speed plan according to the related art and an example of a speed plan according to the first embodiment of the present invention, respectively;

Fig. 11 is a diagram illustrating a vehicle behavior according to the first embodiment of the present invention (environment 2);

Fig. 12 is a diagram illustrating a vehicle behavior according to the first embodiment of the present invention (environment 3);

Fig. 13 is a diagram illustrating a vehicle behavior according to the first embodiment of the present invention (environment 4); and

Fig. 14 is a diagram illustrating a system flow according to a second embodiment of the travelling plan unit 28.

DESCRIPTION OF THE PREFERRED EMBODIMENTS

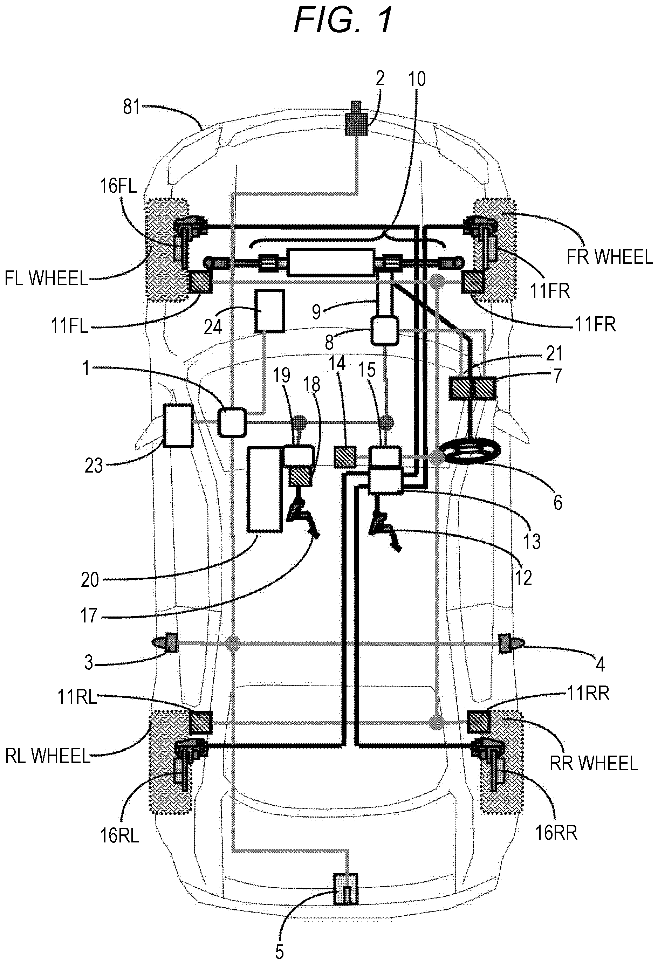

Preferred embodiments of the present invention will be described in detail below with reference to the accompanying drawings. Fig. 1 is a diagram illustrating an entire configuration of a vehicle 81 on which a vehicle travelling control device according to a first embodiment of the present invention is mounted. An FL wheel is a left front wheel, an FR wheel is a right front wheel, an RL wheel is a left rear wheel, and an RR wheel is a right rear wheel.

The vehicle 81 includes a vehicle travelling control device 1 that operates command values for a steering control mechanism 10 to control a travelling direction of the vehicle, a brake control mechanism 13, and a throttle control mechanism 20, on the basis of information of sensors 2, 3, 4, and 5 to recognize an external world. In addition, the vehicle 81 includes a steering control device 8 that controls the steering control mechanism 10, on the basis of the command value from the vehicle travelling control device 1, a braking control device 15 that controls the brake control mechanism 13, on the basis of the command value, and adjusts distribution of brake force of each wheel, an acceleration control device 19 that controls the throttle control mechanism 20, on the basis of the command value, and adjusts a torque output of an engine, and a display device 24 that displays a travelling plan of the own vehicle 81 and a behavior prediction of a moving object existing around the own vehicle 81.

As the sensors to recognize the external world, a camera 2 is provided on a front side, laser radars 3 and 4 are provided on left and right sides, and a millimeter-wave radar 5 is provided on a rear side, so that a relative distance and a relative speed of the own vehicle and a surrounding vehicle can be detected. In addition, the vehicle 81 includes a communication device 23 that performs communication between a road and a vehicle and between vehicles. In this embodiment, a combination of the sensors is described as an example of a sensor configuration. However, the present invention is not limited thereto and a combination of an ultrasonic sensor, a stereo camera, and an infrared camera may be used. The sensor signal is input to the vehicle travelling control device 1.

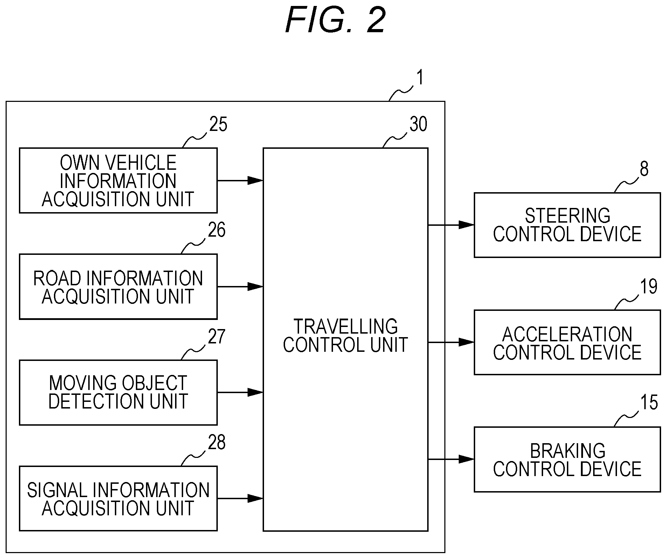

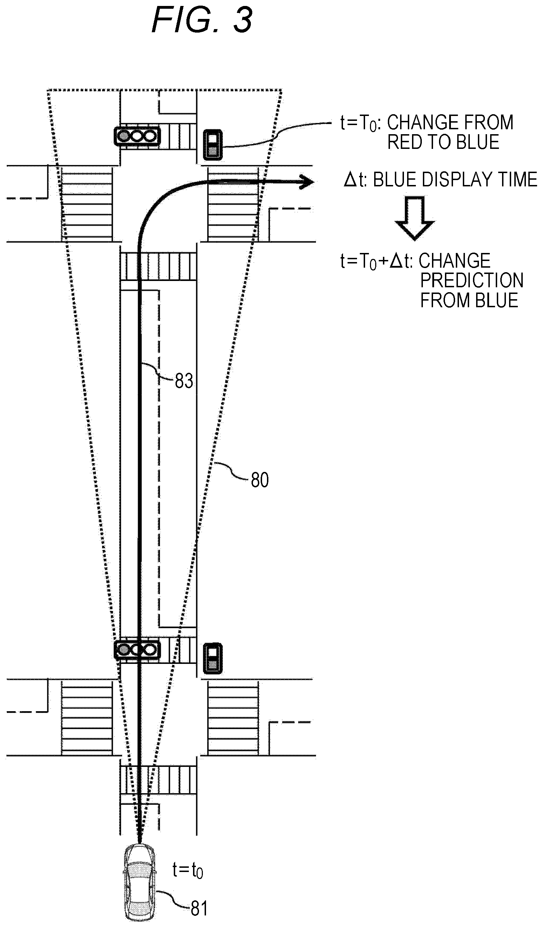

Although not illustrated in detail in Fig. 1, the vehicle travelling control device 1 has a CPU, a ROM, a RAM, and an input/output device. A flow of vehicle travelling control described using Figs. 2 and 3 is stored in the ROM. Although described in detail below, the vehicle travelling control device 1 operates command values of individual actuators 10, 13, and 20 to control vehicle travelling according to the generated travelling plan. The control devices 8, 15, and 19 of the individual actuators 10, 13, and 20 receive the command values of the vehicle travelling control device 1 by the communication and control the individual actuators 10, 13, and 20, on the basis of the command values.

Next, an operation of a brake will be described. In a state in which a driver drives the vehicle, stepping force when the driver steps on the brake pedal 12 is boosted by a brake booster (not illustrated in the drawings) and a hydraulic pressure according to the force is generated by a master cylinder (not illustrated in the drawings). The generated hydraulic pressure is supplied to a wheel cylinder 16 via the brake control mechanism 13. Each of wheel cylinders 16FL to 16RR includes a cylinder (not illustrated in the drawings), a piston, and a pad and in each of the wheel cylinders, the piston is propelled by an operating fluid supplied from the master cylinder 9 and the pad connected to the piston is pressed to a disk rotor. The disk rotor rotates with the wheels (not illustrated in the drawings). For this reason, the brake torque acting on the disk rotor becomes brake force acting on a portion between the wheels and a road surface. In this way, braking force can be generated in each wheel, according to a brake pedal operation of the driver.

Although not illustrated in detail in Fig. 1, the braking control device 15 has a CPU, a ROM, a RAM, and an input/output device, similar to the vehicle travelling control device 1. Sensor signals from a combined sensor 14 capable of detecting longitudinal acceleration, horizontal acceleration, and a yaw rate and wheel speed sensors 11FL to 11RR disposed on the individual wheels and a brake force command from the braking control device 15 are input to the braking control device 15 and a sensor signal from a steering wheel angle detection device 21 is input to the braking control device 15 via the steering control device 8 to be described below. Alternatively, an output of the braking control device 15 is connected to the brake control mechanism 13 having a pump (not illustrated in the drawings) and a control valve and any braking force can be generated in each wheel, independently from the brake pedal operation of the driver. The braking control device 15 executes a function of estimating the spin and the drift-out of the vehicle and the lock of the wheel, on the basis of the information, generates the braking force of the wheel to control these, and raising steering stability of the driver. Or, the vehicle travelling control device 1 communicates the brake command to the braking control device, so that the vehicle travelling control device 1 can generate any brake force in the vehicle, and has a function of automatically performing braking in automatic driving in which the operation of the driver is not generated. However, the present invention is not limited to the braking control device and an actuator other than a brake-by-wire may be used.

Next, an operation of steering will be described. In a state in which the driver drives the vehicle, the steering torque and the steering wheel angle input from the driver using the steering wheel 6 are detected by the steering torque detection device 7 and the steering wheel angle detection device 21, respectively, and the steering control device 8 controls a motor, on the basis of these information, and generates assist torque. Although not illustrated in detail in Fig. 1, the steering control device 8 also has a CPU, a ROM, a RAM, and an input/output device, similar to the vehicle travelling control device 1. The steering control mechanism 10 is moved by total force of the steering torque of the driver and the assist torque by the motor and the front wheel is steered. Meanwhile, reaction force from the road surface is transmitted to the steering control mechanism according to a steering angle of the front wheel and is transmitted as road surface reaction force to the driver.

The steering control device 8 can control the steering control mechanism 10 by generating the torque by the motor 9, independently from the steering operation of the driver. Therefore, the vehicle travelling control device 1 communicates a steering force command to the steering control device 8, so that the vehicle travelling control device 1 can control the front wheel at any steering angle, and has a function of automatically performing steering in automatic driving in which the operation of the driver is not generated. However, the present invention is not limited to the steering control device and an actuator other than a steer-by-wire may be used.

Next, an accelerator will be described. A stepping-in amount of an accelerator pedal 17 of the driver is detected by a stroke sensor 18 and is input to an acceleration control device 19. Although not illustrated in detail in Fig. 1, the acceleration control device 19 also has a CPU, a ROM, a RAM, and an input/output device, similar to the vehicle travelling control device 1. The acceleration control device 19 adjusts a throttle opening according to the stepping-in amount of the accelerator pedal and controls the engine. In this way, the vehicle can be accelerated according to the accelerator pedal operation of the driver. Alternatively, the acceleration control device can adjust the throttle opening, independently from the accelerator operation of the driver. Therefore, the vehicle travelling control device 1 communicates an acceleration command to the acceleration control device, so that the vehicle travelling control device 1 can generate any acceleration in the vehicle, and has a function of automatically performing acceleration in automatic driving in which the operation of the driver is not generated.

Fig. 2 is a block diagram illustrating a part of a configuration according to the first embodiment of the present invention. In the embodiment of Fig. 2, the vehicle travelling control device 1 includes at least an own vehicle information acquisition unit 25, a road information acquisition unit 26, a moving object detection unit 27, a signal information acquisition unit 28, and a travelling control unit 30.

The own vehicle information processing unit 25 specifies a current position of the own vehicle 81 and acquires an operation state amount. A process of the current position specification specifies the position of the own vehicle 81 from external word information acquired by a GPS and at least one of the sensors 2 to 5. In addition to the current position acquisition by the GPS, image data of a surrounding portion of the own vehicle 81 may be acquired by the camera 2, the image data and an external world image and position information to be stored may be collated, and the position of the own vehicle 81 may be specified. Alternatively, a method of recognizing a specific landmark by an image and specifying the position of the own vehicle 81 from the landmark, relative position information of the own vehicle 81, and absolute position information of the landmark is known. As specific examples of an operation state amount acquired in an operation state amount acquisition process, the speed, the longitudinal acceleration, the horizontal acceleration, the yaw rate, and the yaw angle acquired from the combined sensor 14 and the steering angle acquired from the steering wheel angle detection device 21 are known.

The road information acquisition unit 26 acquires travelling schedule information and a target travelling track of the own vehicle 81, from road information of a surrounding area of an area where the own vehicle 81 exists or map information. For example, according to the embodiment of the present invention, when a right turning or left turning operations are executed at an intersection point where the own vehicle 81 exists, the road information acquisition unit 26 acquires information regarding the intersection point where the own vehicle turns to right or left. As the intersection point/road information, the number of lanes of the road at the intersection point, a road width, a crossing angle of the road, a lane width, a median strip width, a crosswalk width, a set-back amount from an intersection crosswalk, and presence or absence of a signal are exemplified. The road information may be possessed as one of the map information and may be acquired as map/road information data via the communication device 23. Particularly, when the map/road information data is acquired from a data center via the communication device 23, newest map/road information can be acquired. In addition, the road information may be acquired from the image information acquired by the camera 2. The acquired map/road information data is used for specifying a position of the own vehicle 81 in the own vehicle information acquisition unit 25.

The moving object detection unit 27 acquires position information of a surrounding obstacle of the own vehicle 81 from the external information acquired by the sensors 2 to 5 mounted on the own vehicle 81 and acquires position and speed information of the moving object when the obstacle is the moving object. When image data of the camera 2 is used, the moving object detection unit 27 can identify types at the same time and acquire information. Particularly, in a stereo camera using two cameras, because the stereo camera can detect a relative distance and a relative speed of the moving object or the obstacle, the stereo camera is superior.

The signal information acquisition unit 28 acquires current signal display at the intersection point in the vicinity of the own vehicle 81 using the sensors 2 to 5 mounted on the own vehicle 81, recognizes remaining time display of a signal for a walker, and predicts a future change of the corresponding signal. Alternatively, the signal information acquisition unit 28 may acquire current and future signal displays by road-to-vehicle communication, using the communication device 23. In addition, the present invention is not limited to the intersection point in the vicinity of the own vehicle 81 and a unit that may acquire a plurality of signal information in a range in which the information can be detected by the sensors 2 to 5 and can be acquired by the communication device 23 and store the plurality of signal information for a predetermined time may be provided. When the future change is predicted on the basis of the signal information detected by the sensors 2 to 5, a unit to store or acquire information of a signal change time associated with the map information is provided.

Fig. 3 illustrates an example of a method of detecting a change of a remote signal using the camera 2 and predicting a future change of the signal. The own vehicle 81 travels a target travelling track 83 in which a most recent signal shows going straight ahead and a previous signal thereof shows turning right. At a time (T0), if it is detected that the right turning schedule intersection point changes from red to blue, a time when a previously acquired signal changes from blue display is predicted as T0 + $\Delta$t, on the basis of a blue display time $\Delta$t of the previously acquired signal. Because this method does no need the communication, a system is superior in that the system concludes in the vehicle. However, this method is effective only under specific conditions in which a curvature of the road is equal to or smaller than a constant value and a blue signal display time is equal to or smaller than a constant value.

The travelling control unit 30 generates a steering angle command value and an acceleration/deceleration command value, on the basis of each information acquired from the own vehicle information processing unit 25, the road information processing unit 26, the moving object detection unit 27, and the signal information processing unit 28, and transmits the command values to the steering control device 8, the acceleration control device 19, and the braking control device 15 by the communication. At this time, information such as a behavior prediction result of the moving object and a travelling plan of the own vehicle 81 may be displayed on the display device 24.

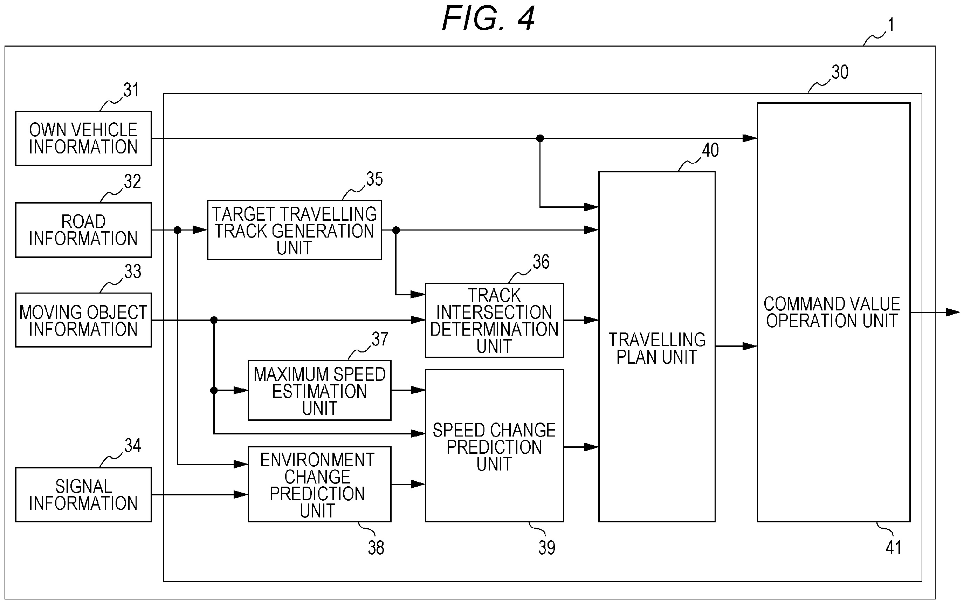

Fig. 4 is a block diagram illustrating a configuration of the travelling control unit 30. In the embodiment of Fig. 4, the travelling control unit 30 receives own vehicle information 31, road information 32, moving object information 33, and signal information 34 and includes at least a target travelling track generation unit 35, a track intersection determination unit 36, a maximum speed estimation unit 37, an environment change prediction unit 38, a speed change prediction unit 39, a travelling plan unit 40, and a command value operation unit 41.

The own vehicle information 31 is information of an own vehicle position and an operation state amount acquired by the own vehicle information acquisition unit 25, the road information 32 is information regarding the travelling schedule road acquired by the road information acquisition unit 26, the moving object information 33 is information such as a current position, a movement direction, and attributes of the moving object existing in the vicinity of the own vehicle 81, acquired by the moving object detection unit 27, and the signal information 34 is information such as current and future signal display colors, acquired by the signal information acquisition unit 28.

The target travelling track generation unit 35 generates a target travelling track of the own vehicle 81, from the information regarding the travelling schedule road. A specific method of a track generation unit acquires destination information and route information of an occupant from a navigation system (not illustrated in the drawings) mounted on the vehicle, determines a travelling lane from information regarding the travelling schedule road, and generates a track passing the travelling lane. At this time, when the obstacle exists on the track, the track is modified occasionally to avoid the obstacle. In addition, in a place where the lane does not exist, such as the intersection point, the target travelling track generation unit 35 generates a smooth track to connect the travelling lanes, on the basis of acquired information such as a shape of the intersection point. The target travelling track generation method is not limited to the above and may previously acquire the target travelling track associated with the map information.

The track intersection determination unit 36 predicts a future track of the moving object, on the basis of a movement direction of the moving object existing in the vicinity of the own vehicle 81, and determines whether the target travelling track of the own vehicle 81 acquired by the target travelling track generation unit 35 and a prediction track of the moving object intersect.

The maximum speed estimation unit 37 estimates a maximum speed of the moving object from the detected attributes of the moving object. Here, there are classifications such as a bicycle, a walker, and a wheelchair and a walk posture, a height, and presence or absence of a baggage, a hat, and an umbrella acquired by the sensors 2 to 5 as specific examples of the attributes. The maximum speed estimation unit 37 estimates age, sex, and presence or absence of own vehicle approach recognition of the moving object from the attributes and estimates a predetermined speed as the maximum speed, on the basis of the estimated attributes. In addition, the maximum speed estimation unit 37 may include a storage unit to store detected information of the moving object over a predetermined time and may calculate the maximum speed of the moving object stochastically or statistically from the behavior of a constant time of the moving object stored in the storage unit.

The environment change prediction unit 38 predicts a future environment change to cause a speed change of the moving object, from the road situation in the vicinity of the own vehicle 81 and the future signal change. Here, the environment change to cause the speed change of the moving object is defined as an environment change becoming a factor causing the speed change of the moving object, in the case in which the speed change of the moving object leads to an accident or a near miss in the past. As specific examples of the environment change to cause the speed change of the moving object, there are a decrease in the remaining time of the blue display of the signal for the walker, a change from the blue display to the blue flickering display, approach of other moving objects including the own vehicle 81 to the moving object, and ringing start of a crossing existing in the movement direction of the moving object. The environment change prediction unit 38 includes a unit to store a speed change factor and compares the road situation and the future signal change and the stored data and determines whether the environment change is the speed change factor of the moving object. The determination may be performed using a function using a current surrounding environment as an input.

When the speed of the moving object changes against the change prediction and does not change against the change prediction, information such as the surrounding environment and a position relation of the moving object at that time can be stored in the storage unit, the stored data of the speed change factor can be updated, and the environment change information becoming the speed change factor can be updated with a speed change factor with higher precision. Alternatively, the information may be transmitted to a database center using the communication device 23 and the information may be analyzed together with the same data collected from other vehicle. In this case, because multiple data are integrated and estimation precision of the speed change factor is improved, this is superior.

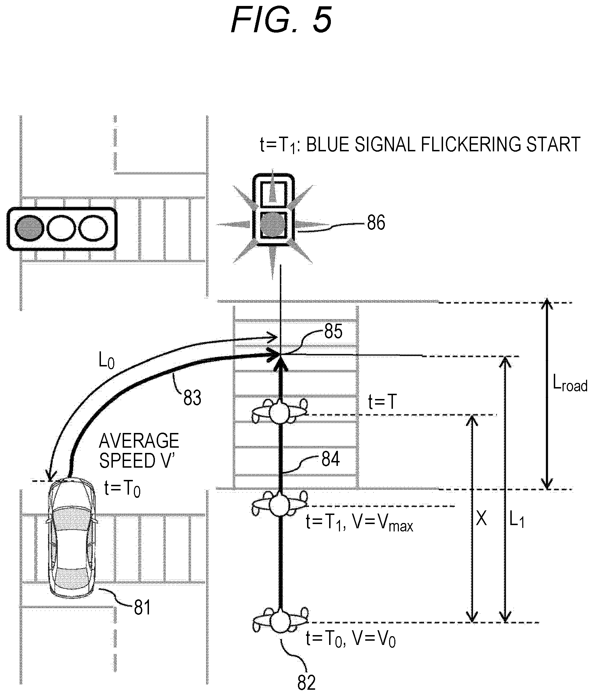

When the future environment change in which the speed change of the moving object is generated is predicted by the environment change prediction unit 38, the speed change prediction unit 39 modifies the future prediction speed of the moving object, on the basis of the maximum speed estimated by the maximum speed estimation unit 37. As illustrated in Fig. 5, a movement distance of the moving object 82 along a prediction track 84 after T (> T1) seconds in the case in which it is predicted that the environment change is generated after T1 seconds is set to X, a current speed thereof is set to V0, and a maximum speed thereof is set to Vmax. The movement distance X is represented by a formula 1.

[Formula 1]

$$X = V0 \cdot T1 + Vmax \cdot (T - T1)$$

When X reaches at least a predetermined ratio of a road width Lroad at an intersection point 85 of a target travelling track 83 of the own vehicle 81 and the prediction track 84 of the moving object 82, until T2 to be an intersection prohibition time with the own vehicle 81, the speed change prediction unit 39 predicts that the moving object 82 moves at the speed Vmax from a time after T1 seconds. Here, the predetermined ratio of the road width is set to about 25% to be a center of a lane of the side where the moving object 82 crosses, at an intersection point of a general two-lane road. This value may be changed by a road shape or the attributes of the moving object. Meanwhile, when X is equal to or lower than the predetermined ratio, the speed change prediction unit 39 predicts that the moving object 82 decreases the speed to V1 (< V0) from the time after T1 seconds and does not arrive at the intersection point with the own vehicle 81 in finite time. Here, as specific examples of the intersection prohibition time, there are the change from the blue flickering of the signal for the walker to the red display and lowering completion of a crossing barrier at the crossing.

When it is determined by the track intersection determination unit 36 that the target travelling track 83 and the prediction track 84 intersect, the travelling plan unit 40 calculates a distance L0 from the own vehicle 81 to an intersection point 85 and a distance L1 from the moving object to the intersection point 85, on the basis of the own vehicle information. In addition, the time T2 until the moving object arrives at the intersection point is calculated from the environment change prediction time T1, the current speed V0 of the moving object, and the speed Vmax of the moving object after the speed change from the speed change prediction unit 39, as represented by a formula 2.

[Formula 2]

$$T2 = \{L1 + (V1 - Vmax) \cdot T1\}/V1$$

If an average speed until the intersection point of the own vehicle 81 is set to V', an arrival time difference (ΔTTC) from the own vehicle 81 to the intersection point 85 of the moving object 82 is as represented by a formula 3.

[Formula 3]

$$\Delta TTC = L0/V' - T2$$

When ΔTTC approaches 0, this means that the own vehicle 81 and the moving object 82 collide at the intersection point 85. For this reason, the travelling plan unit 40 calculates V' in which |ΔTTC| becomes equal to or larger than a predetermined value and makes a speed plan such that an average value of the speed becomes V'. The own vehicle 81 and the moving object 82 have specific sizes. For this reason, if |ΔTTC| is excessively small even when |ΔTTC| is larger than 0, the own vehicle 81 and the moving object 82 may collide with each other. Meanwhile, if |ΔTTC| is excessively large, the own vehicle 81 cannot start at all times under an environment in which a plurality of moving objects exist. Therefore, the predetermined value is set to a value in which both securing of collision avoidance and suppression of frequent acceleration/deceleration can be realized, for example, about 2 seconds.

The command value operation unit 41 generates a steering angle command value and an acceleration/deceleration command value, on the basis of the own vehicle position and the operation state amount, and transmits the command values to the steering control device 8, the acceleration control device 19, and the braking control device 15, such that the vehicle behavior follows the target travelling track and the speed plan acquired from the travelling plan unit 40. At this time, information such as a behavior prediction result of the moving object and a travelling plan of the own vehicle 81 may be displayed on the display device 24.

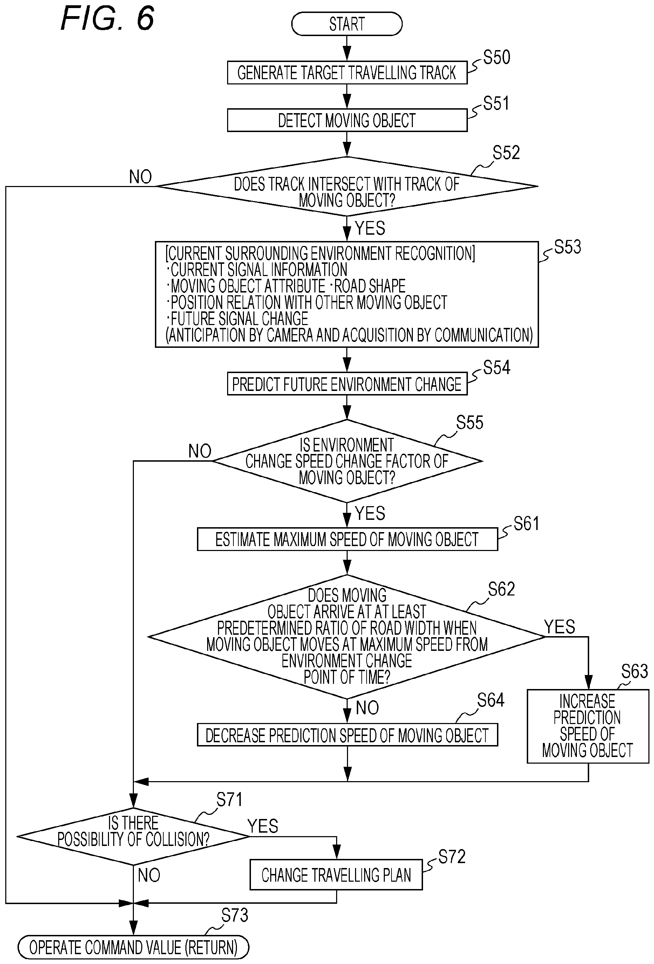

Fig. 6 is a flow diagram illustrating a system flow according to the first embodiment of the present invention. In the flow, it is determined in each calculation step whether it is necessary to modify the travelling plan and when the modification is necessary, the travelling plan is changed according to a predetermined unit.

First, the target travelling track of the own vehicle 81 is generated (S50). Next, the moving object existing in the vicinity of the own vehicle 81 is detected (S51) and it is determined whether the target travelling track 83 of the own vehicle 81 and the prediction track 84 of the moving object 82 intersect (S52). In the case of YES, the process proceeds to S53 and in the case of NO, the target travelling track and the speed plan are delivered to the command value operation unit 43 without changing the target travelling track and the speed plan.

Next, when it is determined that the target travelling track 83 of the own vehicle 81 and the prediction track 84 of the moving object 82 intersect, a current surrounding environment is recognized (S53). A future environment change is predicted on the basis of the recognized environment (S54) and it is determined whether the environment change is a speed change factor of the moving object 82 (S55). In the case of NO, on the assumption that a current speed of the moving object 82 is maintained for a predetermined time, it is determined whether the own vehicle 81 and the moving object 82 are likely to collide with each other, according to the current travelling plan of the own vehicle 81 (S71).

When a determination result of S55 is YES, the process proceeds to S61 and the maximum speed of the moving object 82 is estimated. When the moving object 82 moves at the maximum speed from a point of time of the future environment change predicted on the basis of the estimated maximum speed, it is determined whether X reaches at least the predetermined ratio of the road width until the intersection prohibition time with the own vehicle 81 (S62). When a determination result of S62 is YES, the prediction speed of the moving object 82 is changed to the maximum speed from the point of time of the environment change. Meanwhile, when the determination result of S62 is NO, the prediction speed of the moving object 82 is changed to a prediction speed in which the prediction speed decreases from the point of time of the environment change and becomes zero at a position before reaching the intersection point 85 with the own vehicle 81. After the prediction speed is changed as described above, it is determined whether the own vehicle is likely to collide with the moving object 82 according to the current travelling plan of the own vehicle 81 (S71). Here, collision determination based on a time difference of TTC is executed by the travelling plan unit 40.

When it is determined in S71 that the own vehicle is unlikely to collide with the moving object 82 (NO), the target travelling track and the speed plan of the own vehicle 81 are delivered to the command value operation unit 41 without changing the target travelling track and the speed plan (S73). Meanwhile, when it is determined in S71 that the own vehicle is likely to collide with the moving object 82 (YES), the process proceeds to S72 and the travelling plan unit 40 changes the speed plan to avoid the collision. If a command value operation of S73 ends, the process returns to the start of Fig. 6 and a travelling plan starts in a next calculation step (after ten milliseconds to several hundred milliseconds). That is, it is monitored at all times whether the own vehicle 81 is likely to collide with the moving object and when it is determined that the own vehicle 81 is likely to collide with the moving object, the travelling plan is changed immediately.

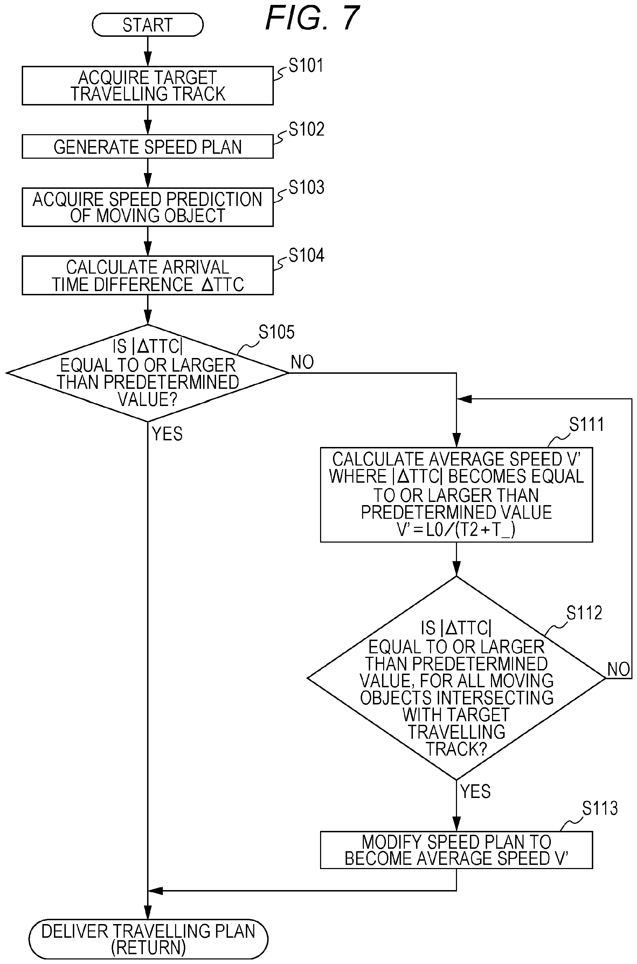

A specific operation of a system flow (S71 and S72) of the travelling plan unit 40 will be described using Fig. 7. First, the target travelling track 83 of the own vehicle 81 generated by the target travelling track generation unit 35 is acquired (S101) and a speed plan to be a speed target value of the own vehicle is generated from a shape of the target travelling track 83 (S102). Next, the future speed prediction information of the moving object 82 predicted by the speed change prediction unit 39 is acquired (S103), the arrival time difference $|\Delta TTC|$ is calculated from the speed plan and the speed prediction information according to the formula 3 (S104), and it is determined whether $|\Delta TTC|$ is equal to or larger than a predetermined value (S105). When $|\Delta TTC|$ is equal to or larger than the predetermined value (S105: YES), it is determined that the own vehicle is likely to collide with the moving object and the speed plan and the target travelling track 83 are delivered to the command value operation unit 41 without changing the speed plan.

Meanwhile, when $|\Delta TTC|$ is smaller than the predetermined value (S105: NO), the process proceeds to S111 and the average value V' of the speed plan of the own vehicle 81 is calculated such that $|\Delta TTC|$ is equal to or larger than the predetermined value (S111). As an example of a calculation method, when the predetermined value of $|\Delta TTC|$ is set to $T\_$, the average value V' of the speed plan is set as represented by a formula 4 (S111).

$$[\text{Formula } 4]$$

$$V' = L0/(T2 + T\_)$$

Here, because the number of intersecting moving objects is not limited to one, $|\Delta TTC|$ is calculated sequentially for all of moving objects existing in a detection range and intersecting with the target travelling track 83 of the own vehicle 81 (S112). If there is the moving object in which $|\Delta TTC|$ becomes smaller than the predetermined value (S112: NO), the process returns to S111 and the average speed V' is calculated again. The above process is repeated by the number of detected moving objects. If $|\Delta TTC|$ is equal to or larger than the predetermined value in all of the moving objects (S112: YES), the speed plan is modified on the basis of the average speed V' at that time (S113) and is delivered to the command value operation unit 41. As specific examples of a speed modification method, there are a method of setting a speed in a travelling plan change period to a constant value of V', a method of calculating predetermined acceleration and an acceleration/deceleration start position from a current speed of the own vehicle 81 and a target speed at a travelling plan end point of time, such that the average speed becomes V', and a method of calculating an optimal value using the current speed, the target speed, and an acceleration variation limitation value as constraint conditions.

Content of a speed change prediction result of the moving object and a speed plan of the own vehicle 81 based on the speed change prediction result is preferably provided to the occupant by the display device 24. As specific examples of information to be displayed, there are display of the moving object existing in the vicinity of the own vehicle 81 and display of a prediction movement track, presence or absence of track intersection of the own vehicle 81 and the moving object, TTC, and a current travelling plan and a future behavior of the own vehicle 81. In the case of automatic travelling in which there is no operation of the occupant, if a difference is generated between travelling assumed by the occupant and actual travelling of the vehicle, this leads to a sense of insecurity. The difference can be reduced by the display device 24 and a sense of security of the occupant can be raised.

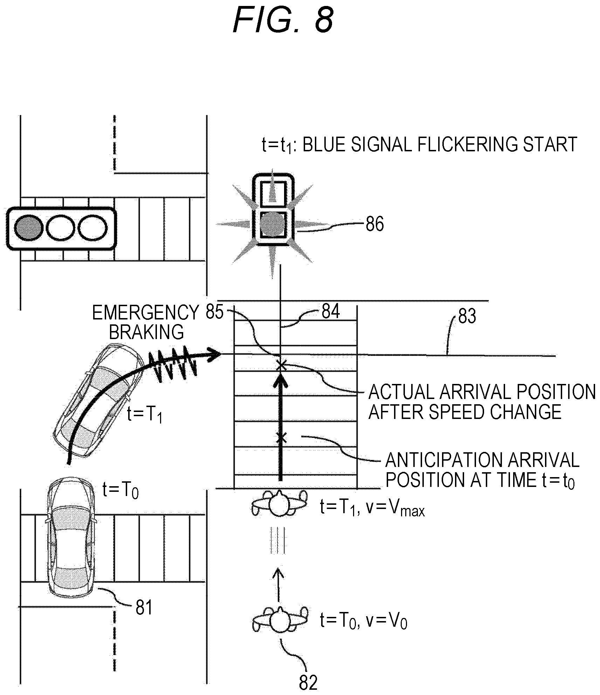

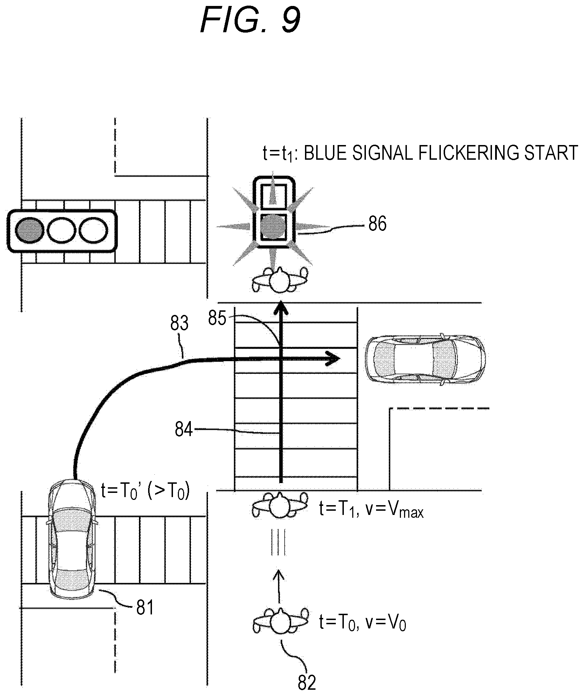

A function of the first embodiment of the present invention will be described using Figs. 8 to 13. A situation where an environment change such as flickering start of the signal for the walker is generated when the own vehicle 81 turns to the right by automatic travelling by the vehicle travelling control device 1 at an intersection point of a two-lane road with a signal is assumed (environment 1). Fig. 8 illustrates a vehicle behavior when the related art is assumed and steps of S53 to S55 and S61 to S64 are omitted and Fig. 9 illustrates a vehicle behavior when the first embodiment of the present invention is applied and all steps are applied. When the own vehicle 81 arrives at the intersection point, the moving object 82 (for example, the walker) moving in a direction toward the intersection point is detected (S51) and it is detected that the target travelling track 83 of the own vehicle and the prediction track 84 to be an extension of a movement direction of the moving object 82 intersect (S52: YES).

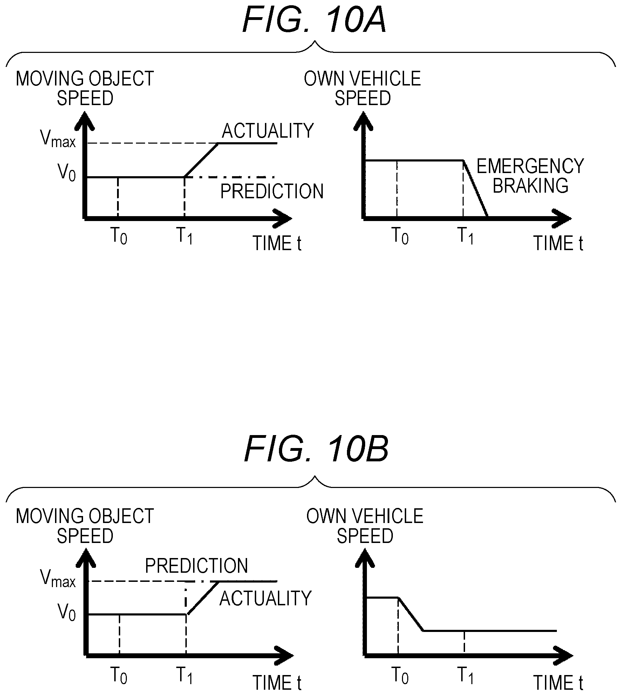

In the related art, as illustrated at a left side of Fig. 10A, the collision determination with the own vehicle is performed on the assumption that a speed V0 at a current time (T0) is maintained as the speed of the moving object 82 (S71). As a result, when the own vehicle 81 arrives at the intersection point 85 of the target travelling track 83 of the own vehicle 81 and the prediction track 84 of the moving object 82, the moving object 82 exists in front of the own vehicle 81. For this reason, it is determined that the own vehicle 81 is unlikely to collide with the moving object 82 (S71: NO) and a current speed plan is maintained as illustrated at a right side of Fig. 10A. However, when the signal for the walker 86 flickers at the time (T1) and the moving object 82 travels at the speed Vmax accordingly, it is determined that the own vehicle 81 is likely to collide with the moving object 82 (S71: YES) and the speed plan is changed (S72). As a result, as illustrated at the right side of Fig. 10A, emergency braking in which the speed after the time (T1) is decreased rapidly is performed, which results in leading to a sense of insecurity.

Meanwhile, according to the present invention, when it is detected that the target travelling track 83 and the prediction track 84 intersect (S52: YES), the shape of the intersection point, the current and future signal changes, and the attributes of the moving object are predicted by the sensors or acquired by communication (S53), and the future change in which display of the signal for the walker 86 changes to green flickering display at the time (T1) and the display of the signal for the walker 86 changes to red display at the time (T2) is predicted (S54). The flickering of the signal for the walker is previously stored as the speed change factor of the walker in the storage unit included in the environment change prediction unit 38. For this reason, it is determined that the environment change is the speed change factor of the moving object (S55: YES) and the maximum speed of the moving object is estimated (S61). Here, it is estimated that the moving object can move at the current speed V0 to the speed Vmax higher than the current speed, from the height or the walking posture of the moving object, a prediction position X of the moving object 82 at the time (T2) is calculated according to the formula 1. When X is calculated as a value equal to or larger than the predetermined value of the road width (S62: YES), as illustrated at the left side of Fig. 10B, it is predicted that the moving object 82 moves at the maximum speed Vmax from the time (T1) (S63). The arrival time difference ΔTTC is calculated again from a speed change prediction value of the moving object 82 and it is determined that the own vehicle 81 is likely to collide with the moving object 82 (S71: YES). As illustrated at the right side of Fig. 10B, the speed plan for decreasing the speed of the own vehicle 81 is changed (S72) and collision avoidance is realized by decreasing |ΔTTC|. The command values are transmitted to the individual actuators 8, 15, and 19 of the vehicle according to the changed speed plan (S73). As a result, a change of the travelling plan with emergency braking can be suppressed and a sense of discomfort or a sense of insecurity for the occupant and the following vehicle can be reduced.

In the above, the change moment of the signal for the walker from the green display to the green flickering display is set as the environment change point of time. However, in the case of the signal for the walker with the remaining time display function, a point of time when a gauge showing the remaining time shows that the remaining time is very short is set as the environment change point of time. In addition, when the remaining time is displayed by a numerical value, a predetermined time (for example, before 5 seconds) may be set as the environment change point of time.

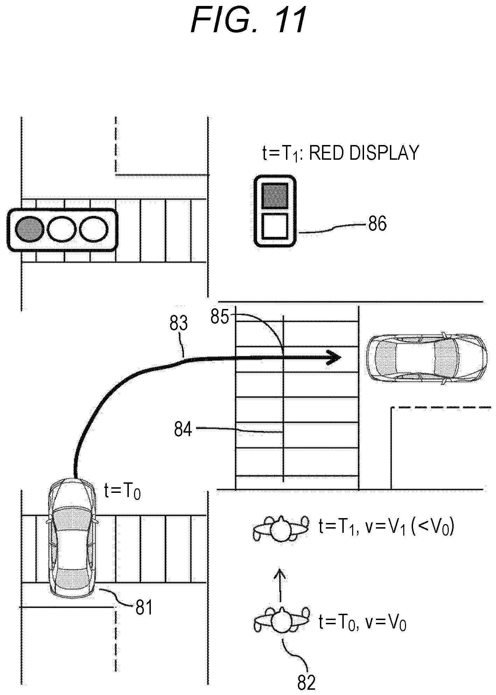

The above is the function according to the first embodiment of the present invention. However, the first embodiment can be applied to an environment other than the above environment. In Fig. 11, a situation where an environment change in which the signal for the walker flickers at the time (T0) and the display of the signal for the walker changes to red display at the time (T1) before crossing start of the walker is generated when the own vehicle 81 turns to the right by automatic travelling by the vehicle travelling control device 1 at an intersection point of a two-lane road with a signal is assumed (environment 2). At this time, in the present invention, a prediction position X of the moving object 82 at the time (T2) is calculated according to the formula 1 and X is calculated as a value equal to or smaller than the predetermined value of the road width (S62: NO). Therefore, it is predicted that the moving object 82 decreases and stops crossing, from the time (T1) (S64), it is determined that the own vehicle is unlikely to collide with the moving object (S71: NO), and the own vehicle 81 turns to the right without changing the speed plan. As a result, the speed can be prevented from being decreased due to an unnecessary situation and a sense of discomfort or a sense of insecurity for the occupant and the following vehicle can be reduced.

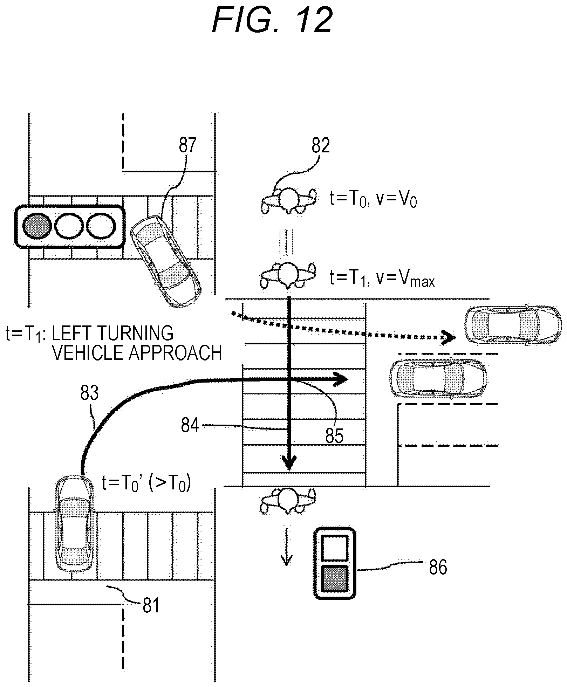

In Fig. 12, a situation where an environment change in which a right turning vehicle facing the own vehicle approaches a crosswalk at the time (T1) is generated when the own vehicle 81 turns to the right by automatic travelling by the vehicle travelling control device 1 at an intersection point of a four-lane road to be a right turning destination is assumed (environment 3). At this time, in an operation according to the present invention, similar to the environment 1, the speed increase of the moving object is predicted and the speed plan of the own vehicle is modified such that the speed decreases. The time (T1) when other vehicle 87 approaches the moving object 82 can be predicted from the distance between other vehicle 87 and the intersection point and the speed of other vehicle. At this time, a method of detecting lighting of a turn signal of the facing vehicle by the camera 2 is exemplified as a method of confirming a left turning intention of the facing vehicle. For vehicles not lighting the turn signal, a speed change of other vehicle 87 in front of the intersection point is detected and left turning at the intersection point is predicted with respect to other vehicle 87 performing unnatural deceleration as compared with a traffic state of a facing lane.

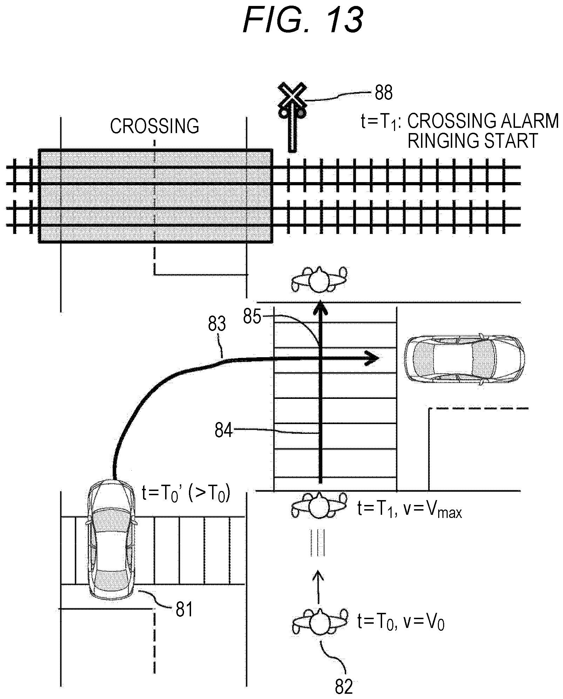

In Fig. 13, a situation where an environment change in which a crossing alarm 88 rings at the time (T1) is generated when a crossing exists near the intersection point and the own vehicle 81 turns to the right by automatic travelling by the vehicle travelling control device 1 is assumed (environment 4). At this time, in an operation according to the present invention, similar to the environment 1, the speed increase of the moving object is predicted and the speed plan of the own vehicle is modified such that the speed decreases. As a method of acquiring a crossing ringing start time (T1), acquisition by road-to-vehicle communication and approach detection of a train by radio reception of a train approach alarm device are exemplified.

In the first embodiment, if the speed increase of the moving object 82 is predicted when the own vehicle 81 passes through the intersection point 85 after the moving object 82 passes through the intersection point 85, the own vehicle 81 increases the speed as compared with the related art. At this time, when the moving object does not increase the speed as predicted, it is necessary to perform the emergency braking to avoid the collision by determining a collision risk. Therefore, in the present invention, the travelling plan unit 40 may make the speed plan of the own vehicle again, only when the moving object 82 increases the speed and $|\Delta TTC|$ is smaller than the predetermined value (second embodiment).

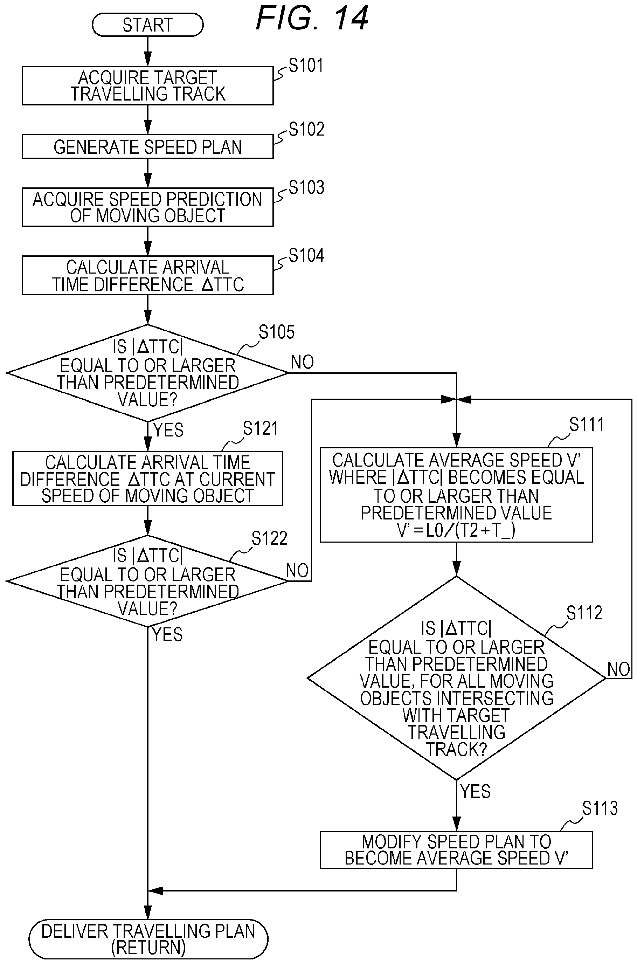

A specific example of a system flow according to a second embodiment will be described using Fig. 14. First, the target travelling track 83 of the own vehicle 81 generated by the target travelling track generation unit 35 is acquired (S101) and a speed plan to be a speed target value of the own vehicle is generated from a shape of the target travelling track 83 (S102). Next, future speed prediction information of the moving object 82 predicted by the speed change prediction unit 39 is acquired (S103), the arrival time difference $|\Delta TTC|$ is calculated from the speed plan and the speed prediction information according to the formula 3 (S104), and it is determined whether $|\Delta TTC|$ is equal to or larger than the predetermined value (S105).

When $|\Delta TTC|$ is equal to or larger than the predetermined value (S105: YES), $|\Delta TTC|$ is calculated on the assumption that the current speed of the moving object 82 is maintained until the moving object 82 arrives at the intersection point 85 (the speed of the moving object 82 does not change) (5121). As a result, when $|\Delta TTC|$ is equal to or larger than the predetermined value (S122: YES), it is determined that the own vehicle is unlikely to collide with the moving object and the speed plan and the target travelling track 83 are delivered to the command value operation unit 41 without changing the speed plan.

Meanwhile, when it is determined in S122 that $|\Delta TTC|$ is smaller than the predetermined value (S122: NO), the process proceeds to S111 and the average value V' of the speed plan of the own vehicle 81 is calculated such that $|\Delta TTC|$ is equal to or larger than the predetermined value (S111). Then, the same process as the process according to the first embodiment described in Fig. 7 is executed. By the second embodiment, a risk when the speed change prediction of the moving object is incorrect can be reduced and a sense of security of the occupant can be further increased.

In the embodiments described above, the case in which the automatic travelling is performed by the vehicle travelling control device 1 has been described. However, the present invention can be applied to a driving support system mounted on a vehicle driven by the driver. In this case, if future travelling path and speed of the own vehicle are predicted from a current driving state of the driver and travelling is performed according to the prediction, a warning can be given to the driver when there is a risk of collision with the moving object of which the speed has been changed. Because the emergency braking to avoid the collision can be automatically performed earlier as compared with the related art, a collision avoidance system with high reliability can be realized.

In addition, in the embodiments described above, the future speed change of the moving object is predicted from the future environment change. However, accuracy of the speed change prediction of the moving object can be improved by a unit to detect the behavior intention of the moving object directly. For example, the own vehicle includes a communication unit with a portable terminal of the moving object, a movement schedule path of the moving object is acquired from the portable terminal by communication, the crossing intention of the moving object at the intersection point is determined with high accuracy, and it is determined more accurately whether the target travelling track of the own vehicle 81 and the prediction track of the moving object intersect.

The embodiments have been described. However, a specific configuration is not limited to the individual embodiments and various design changes can be made without departing from the scope of the invention.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1.   A vehicle travelling control device (1) comprising:

   a target travelling track generation unit (35) which generates a target travelling track (83) of an own vehicle (81) ;

a moving object prediction track generation unit which generates a prediction track of a moving object around the own vehicle (81);

a track intersection determination unit (36) which determines whether the prediction track and the target travelling track (83) intersect;

a travelling plan unit (40) which plans a speed and a travelling track of the own vehicle (81) based on the track intersection determination unit (36);

an environment change prediction unit (38) which acquires current signal information, attributes of the moving object, a road shape, and a position relation of the moving object around the own vehicle (81) and the own vehicle (81) using cameras, predicts a future change of the signal information using the cameras or acquires the future change using communication, and predicts a future environment change causing a speed change of the moving object; **characterized by**

a maximum speed estimation unit (37) which estimates a maximum speed of the moving object, on the basis of the attributes of the moving object; and

a speed change prediction unit (39) which predicts that the moving object moves at the maximum speed from a point of time of the environment change, when the moving object moves at the maximum speed from the point of time of the environment change and a reachable range is equal to or more than a specific ratio of a road width at an intersection point with the own vehicle until an intersection prohibition time with the own vehicle (81), and predicts that a movement speed of the moving object decreases or the moving object stops from the point of time of the environment change, when the reachable range is not equal to or more than the specific ratio, wherein

the travelling plan unit (40) performs modification of a travelling plan changing at least one of the speed and the travelling track of the own vehicle (81), when a collision of the own vehicle (81) and the moving object is predicted on the basis of information predicted by the speed change prediction unit (39), and determines command values of a steering angle and acceleration and deceleration, on the basis of the travelling plan and own vehicle information.

2. The vehicle travelling control device according to claim 1, further comprising:

a display device (24) which displays information to an occupant of the own vehicle (81), wherein the display device (24) displays a future movement prediction of the moving object and a travelling plan of the own vehicle (81).

3. The vehicle travelling control device according to at least one of claims 1 and 2, wherein the environment change prediction unit (38) detects at least one of whether a signal for a walker changes from blue display to blue flickering display, whether the signal for the walker with a remaining time display function shows that the remaining time is very short, whether the own vehicle or other moving object approaches the moving object, and whether a crossing starts ringing and predicts a speed increase of the moving object.

4. The vehicle travelling control device according to at least one of claims 1 to 3, wherein the speed change prediction unit (39) predicts or detects at least one of a time when a signal for a walker changes from blue flickering display to red display and a time when a crossing gate descends completely as the intersection prohibition time with the own vehicle and predicts a speed decrease or a stop of the moving object at the time.

5. The vehicle travelling control device according to at least one of claims 1 to 4, wherein the environment change prediction unit (38) includes a unit that stores a past signal change of the signal information acquired using the cameras and predicts a future change of the signal information, on the basis of signal change time information associated with map information.

6. The vehicle travelling control device according to at least one of claims 1 to 5, wherein the maximum speed estimation unit (37) includes a unit that stores an attribute of at least one of a size, a posture, and a movement speed of the moving object for a predetermined time and estimates a maximum speed according to a predetermined maximum speed for each attribute.

7. The vehicle travelling control device according to at least one of claims 1 to 6, wherein the environment change prediction unit (38) includes an environment change storage unit that accumulates an environment change becoming a speed change factor of the moving object and when the moving object moves at a speed different from a prediction speed based on the speed change prediction unit (39), the environment change prediction unit (38) stores a surrounding environment at a corresponding point of time in the environment change storage unit or transmits the surrounding environment by communication and updates the environment change stored in the environment change storage unit, on the basis of the surrounding environment.

8.  The vehicle travelling control device according to at least one of claims 1 to 7, wherein
the travelling plan unit (40) acquires an intersection point of the target travelling track and a movement direction of the moving object, acquires an own vehicle (81) arrival time to be a time until the own vehicle (81) arrives at the intersection point, on the basis of the speed of the own vehicle (81), acquires a moving object arrival time to be a time until the moving object arrives at the intersection point, on the basis of a current movement speed of the moving object until the point of time of the environment change and on the basis of the maximum speed after the point of time of the environment change, calculates an arrival time difference to be a difference of the own vehicle (81) arrival time and the moving object arrival time, and predicts a collision of the own vehicle (81) and the moving object and makes a travelling plan, when the arrival time difference is equal to or smaller than a predetermined value.

9.  The vehicle travelling control device according to claim 8, wherein
when the arrival time difference calculated in a state in which it is predicted that the moving object maintains a current speed is equal to or smaller than the predetermined value and the arrival time difference calculated in consideration of a speed increase prediction of the moving object based on the speed change prediction unit is equal to or larger than the predetermined value, the travelling plan unit (40) predicts that the moving object maintains the current speed after the environment change against the speed change prediction unit (39) and makes the travelling plan.

**Patentansprüche**

1.  Vorrichtung (1) zum Steuern der Fahrt eines Fahrzeugs, die Folgendes umfasst:

eine Einheit (35) zum Erzeugen einer Zielfahrspur, die eine Zielfahrspur (83) eines Trägerfahrzeugs (81) erzeugt;
eine Einheit zum Erzeugen einer Vorhersagespur eines bewegten Objekts, die eine Vorhersagespur eines bewegten Objekts um das Trägerfahrzeug (81) erzeugt;
eine Einheit (36) zum Bestimmen einer Spurkreuzung, die bestimmt, ob sich die Vorhersagespur und die Zielfahrspur (83) kreuzen;
eine Einheit (40) zum Planen der Fahrt, die eine Geschwindigkeit und eine Fahrspur des Trägerfahrzeugs (81) auf der Grundlage der Einheit (36) zum Bestimmen einer Spurkreuzung plant;
eine Einheit (38) zum Vorhersagen einer Umgebungsänderung, die aktuelle Signalinformationen, Attribute der bewegten Objekte, eine Straßenform und eine Positionsbeziehung des bewegten Objekts um das Trägerfahrzeug (81) und des Trägerfahrzeugs (81) unter Verwendung von Kameras erfasst, eine zukünftige Änderung der Signalinformationen unter Verwendung der Kameras vorhersagt oder die zukünftige Änderung unter der Verwendung von Kommunikation erfasst und eine zukünftige Umgebungsänderung vorhersagt, die eine Geschwindigkeitsänderung des bewegten Objekts bewirkt;
**gekennzeichnet durch**
eine Maximalgeschwindigkeit-Schätzeinheit (37), die eine maximale Geschwindigkeit des bewegten Objekts auf der Basis der Attribute des bewegten Objekts schätzt, und
eine Einheit (39) zum Vorhersagen einer Geschwindigkeitsänderung, die vorhersagt, dass sich das bewegte Objekt mit der maximalen Geschwindigkeit ab einem Zeitpunkt der Umgebungsänderung bewegt, wenn sich das bewegte Objekt mit der maximalen Geschwindigkeit ab dem Zeitpunkt der Umgebungsänderung bewegt und eine Reichweite gleich oder größer als ein spezifisches Verhältnis einer Straßenbreite an einem Kreuzungspunkt mit dem Trägerfahrzeug bis zu einer Kreuzungsverbotszeit mit dem Trägerfahrzeug (81) ist, und vorhersagt, dass eine Bewegungsgeschwindigkeit des bewegten Objekts nach dem Zeitpunkt der Umgebungsänderung abnimmt oder das bewegte Objekt anhält, wenn die Reichweite nicht gleich oder größer als das spezifische Verhältnis ist, wobei
die Einheit (40) zum Planen der Fahrt eine Modifikation eines Fahrtplans durchführt, der die Geschwindigkeit und/oder die Fahrspur des Trägerfahrzeugs (81) ändert, wenn ein Zusammenstoß des Trägerfahrzeugs (81) und des bewegten Objekts auf der Basis von Informationen, die durch die Einheit (39) zum Vorhersagen einer Geschwindigkeitsänderung vorhergesagt werden, vorhergesagt wird, und Befehlswerte eines Lenkwinkels und einer Beschleunigung und einer Verzögerung auf der Basis der Fahrtplanung und der Informationen über das Trägerfahrzeug bestimmt.

2.  Vorrichtung zum Steuern der Fahrt eines Fahrzeugs nach Anspruch 1, die ferner Folgendes umfasst:

eine Anzeigevorrichtung (24), die einem Insassen des Trägerfahrzeugs (81) Informationen anzeigt, wobei die Anzeigevorrichtung (24) eine Vorhersage der zukünftigen Bewegung des bewegten Objekts und eine Fahrtplanung des Trägerfahrzeugs (81) anzeigt.

3. Vorrichtung zum Steuern der Fahrt eines Fahrzeugs nach mindestens einem der Ansprüche 1 und 2, wobei die Einheit (38) zum Vorhersagen einer Umgebungsänderung detektiert, ob sich ein Signal für einen Fußgänger von einer blauen Anzeige auf eine blaublickende Anzeige ändert und/oder ob das Signal für den Fußgänger mit einer Anzeigefunktion der verbleibenden Zeit zeigt, dass die verbleibende Zeit sehr kurz ist, und/oder ob sich das Trägerfahrzeug oder andere bewegte Objekte dem bewegten Objekt nähern und/oder ob ein Übergang anfängt, zu klingeln, und eine Geschwindigkeitszunahme des bewegten Objekts vorhersagt.

4. Vorrichtung zum Steuern der Fahrt eines Fahrzeugs nach mindestens einem der Ansprüche 1 bis 3, wobei die Einheit (39) zum Vorhersagen einer Geschwindigkeitsänderung eine Zeit, zu der sich ein Signal für einen Fußgänger von einer blaublickenden Anzeige zu einer roten Anzeige ändert, und/oder eine Zeit, zu der eine Schranke vollständig niedergeht, als die Kreuzungsverbotszeit mit dem Trägerfahrzeug vorhersagt oder detektiert und eine Geschwindigkeitsabnahme oder einen Stopp des bewegten Objekts zu dieser Zeit vorhersagt.

5. Vorrichtung zum Steuern der Fahrt eines Fahrzeugs nach mindestens einem der Ansprüche 1 bis 4, wobei die Einheit (38) zum Vorhersagen einer Umgebungsänderung eine Einheit enthält, die eine vergangene Signaländerung der Signalinformationen, die unter der Verwendung von Kameras erfasst werden, speichert und eine zukünftige Änderung der Signalinformationen auf der Basis von Signaländerungszeitinformationen, die Karteninformationen zugeordnet sind, vorhersagt.

6. Vorrichtung zum Steuern der Fahrt eines Fahrzeugs nach mindestens einem der Ansprüche 1 bis 5, wobei die Maximalgeschwindigkeit-Schätzeinheit (37) eine Einheit enthält, die ein Attribut einer Größe und/oder einer Stellung und/oder einer Bewegungsgeschwindigkeit des bewegten Objekts für eine vorgegebene Zeit speichert und eine maximale Geschwindigkeit gemäß einer vorgegebenen maximalen Geschwindigkeit für jedes Attribut schätzt.

7. Vorrichtung zum Steuern der Fahrt eines Fahrzeugs nach mindestens einem der Ansprüche 1 bis 6, wobei die Einheit (38) zum Vorhersagen einer Umgebungsänderung eine Speichereinheit der Umgebungsänderung enthält, die eine Umgebungsänderung sammelt, die ein Geschwindigkeitsänderungsfaktor des bewegten Objekts wird, und dann, wenn sich das bewegte Objekt mit einer Geschwindigkeit bewegt, die von einer Vorhersagegeschwindigkeit auf der Grundlage der Einheit (39) zum Vorhersagen einer Geschwindigkeitsänderung verschieden ist, die Einheit (38) zum Vorhersagen einer Umgebungsänderung eine umliegende Umgebung zu einem entsprechenden Zeitpunkt in der Speichereinheit der Umgebungsänderung speichert oder die umliegende Umgebung durch Kommunikation sendet und die Umgebungsänderung, die in der Speichereinheit der Umgebungsänderung gespeichert ist, auf der Basis der umliegenden Umgebung aktualisiert.

8. Vorrichtung zum Steuern der Fahrt eines Fahrzeugs nach mindestens einem der Ansprüche 1 bis 7, wobei die Einheit (40) zum Planen einer Fahrt einen Kreuzungspunkt der Zielfahrspur und eine Bewegungsrichtung des bewegenden Objekts erfasst, eine Ankunftszeit (81) eines Trägerfahrzeugs auf der Basis der Geschwindigkeit des Trägerfahrzeugs (81) als eine Zeit erfasst, bis das Trägerfahrzeug (81) an dem Kreuzungspunkt ankommt, eine Ankunftszeit des bewegten Objekts auf der Basis einen aktuellen Bewegungsgeschwindigkeit des bewegten Objekts bis zu dem Zeitpunkt der Umgebungsänderung und auf der Basis der maximalen Geschwindigkeit nach dem Zeitpunkt der Umgebungsänderung als eine Zeit erfasst, bis das bewegte Objekt an dem Kreuzungspunkt ankommt, eine Ankunftszeitdifferenz als eine Differenz zwischen der Ankunftszeit (81) des Trägerfahrzeugs und der Ankunftszeit des bewegten Objekts berechnet und einen Zusammenstoß des Trägerfahrzeugs (81) und des bewegten Objekts vorhersagt und eine Fahrtplanung erstellt, wenn der Ankunftszeitunterschied gleich oder kleiner als ein vorgegebener Wert ist.

9. Vorrichtung zum Steuern der Fahrt eines Fahrzeugs nach Anspruch 8, wobei dann, wenn die Ankunftszeitdifferenz, die in einem Zustand berechnet wird, in dem vorhergesagt wird, dass das bewegte Objekt eine aktuelle Geschwindigkeit beibehält, gleich oder kleiner als der vorgegebene Wert ist und die Ankunftszeitdifferenz, die unter Berücksichtigung einer Vorhersage der Geschwindigkeitszunahme des bewegten Objekts auf der Grundlage der Einheit zum Vorhersagen einer Geschwindigkeitsänderung berechnet wird, gleich oder größer als der vorgegebene Wert ist, die Einheit (40) zum Planen der Fahrt vorhersagt, dass das bewegte Objekt die aktuelle Geschwindigkeit entgegen der Einheit (39) zum Vorhersagen einer Geschwindigkeitsänderung nach der Umgebungsänderung beibehält, und die Fahrtplanung erstellt.

**Revendications**

1.  Dispositif de commande de déplacement de véhicule (1) comprenant :

    une unité de génération de voie de déplacement cible (35) qui génère une voie de déplacement cible (83) d'un propre véhicule (81) ;
    une unité de génération de voie de-prédiction d'objet en mouvement qui génère une voie de prédiction d'un objet en mouvement autour du propre véhicule (81) ;
    une unité de détermination d'intersection de voies (36) qui détermine si la voie de prédiction et la voie de déplacement cible (83) se croisent ;
    une unité de plan de déplacement (40) qui planifie une vitesse et une voie de déplacement du propre véhicule (81) sur la base de l'unité de détermination d'intersection de voies (36) ;
    une unité de prédiction de changement d'environnement (38) qui acquiert des informations de signal actuelles, des attributs de l'objet en mouvement, une forme de route et une relation de position de l'objet en mouvement autour du propre véhicule (81) et du propre véhicule (81) à l'aide de caméras, prédit un changement futur des informations de signal à l'aide des caméras ou acquiert le changement futur à l'aide d'une communication et prédit un changement futur d'environnement provoquant un changement de vitesse de l'objet en mouvement ;
    **caractérisé par**
    une unité d'estimation de vitesse maximale (37) qui estime une vitesse maximale de l'objet en mouvement sur la base des attributs de l'objet en mouvement ; et
    une unité de prédiction de changement de vitesse (39) qui prédit que l'objet en mouvement se déplace à la vitesse maximale à partir d'un instant du changement d'environnement lorsque l'objet en mouvement se déplace à la vitesse maximale à partir de l'instant du changement d'environnement et qu'une plage atteignable est égale ou supérieure à un rapport spécifique d'une largeur de route à un point d'intersection avec le propre véhicule jusqu'à un temps d'interdiction d'intersection avec le propre véhicule (81) et prédit qu'une vitesse de mouvement de l'objet en mouvement diminue ou que l'objet en mouvement s'arrête à partir de l'instant du changement d'environnement lorsque la plage atteignable n'est pas égale ou supérieure au rapport spécifique, dans lequel l'unité de plan de déplacement (40) effectue une modification d'un plan de déplacement modifiant la vitesse et/ou la voie de déplacement du propre véhicule (81) lorsqu'une collision du propre véhicule (81) et de l'objet en mouvement est prédite sur la base des informations prédites par l'unité de prédiction de changement de vitesse (39), et détermine des valeurs d'ordre d'un angle de braquage, d'accélération et de décélération sur la base du plan de déplacement et d'informations sur le propre véhicule.

2.  Dispositif de commande de déplacement de véhicule selon la revendication 1, comprenant en outre :

    un dispositif d'affichage (24) qui affiche des informations à un occupant du propre véhicule (81), dans lequel le dispositif d'affichage (24) affiche une prédiction de mouvement futur de l'objet en mouvement et un plan de déplacement du propre véhicule (81).

3.  Dispositif de commande de déplacement de véhicule selon au moins l'une des revendications 1 et 2, dans lequel l'unité de prédiction de changement d'environnement (38) détecte au moins l'un des événements suivants : si un signal pour un piéton passe d'un affichage bleu à un affichage clignotant bleu, si le signal pour le piéton avec une fonction d'affichage du temps restant indique que le temps restant est très court, si le propre véhicule ou un autre objet en mouvement s'approche de l'objet en mouvement, et si un passage commence à sonner et prédit une augmentation de vitesse de l'objet en mouvement.

4.  Dispositif de commande de déplacement de véhicule selon au moins l'une des revendications 1 à 3, dans lequel l'unité de prédiction de changement de vitesse (39) prédit ou détecte au moins un temps parmi un temps où un signal pour un piéton passe de l'affichage clignotant bleu à l'affichage rouge et un temps où une barrière de passage descend complètement en tant que temps d'interdiction d'intersection avec le propre véhicule et prédit une diminution de vitesse ou un arrêt de l'objet en mouvement à ce temps.

5.  Dispositif de commande de déplacement de véhicule selon au moins l'une des revendications 1 à 4, dans lequel l'unité de prédiction de changement d'environnement (38) inclut une unité qui stocke un changement de signal passé des informations de signal acquises à l'aide des caméras et prédit un changement futur des informations de signal sur la base des informations de temps de changement de signal associées à des informations cartographiques.

6.  Dispositif de commande de déplacement de véhicule selon au moins l'une des revendications 1 à 5, dans lequel

l'unité d'estimation de vitesse maximale (37) inclut une unité qui stocke un attribut d'au moins une propriété parmi une taille, une posture et une vitesse de mouvement de l'objet en mouvement pendant un temps prédéterminé et estime une vitesse maximale en fonction d'une vitesse maximale prédéterminée pour chaque attribut.

7. Dispositif de commande de déplacement de véhicule selon au moins l'une des revendications 1 à 6, dans lequel l'unité de prédiction de changement d'environnement (38) inclut une unité de stockage de changement d'environnement qui accumule un changement d'environnement devenant un facteur de changement de vitesse de l'objet en mouvement et, lorsque l'objet en mouvement se déplace à une vitesse différente d'une vitesse de prédiction basée sur l'unité de prédiction de changement de vitesse (39), l'unité de prédiction de changement d'environnement (38) stocke un environnement périphérique à un instant correspondant dans l'unité de stockage de changement d'environnement ou transmet l'environnement périphérique par communication et met à jour le changement d'environnement stocké dans l'unité de stockage de changement d'environnement sur la base de l'environnement périphérique.

8. Dispositif de commande de déplacement de véhicule selon au moins l'une des revendications 1 à 7, dans lequel l'unité de plan de déplacement (40) acquiert un point d'intersection de la voie de déplacement cible et une direction de mouvement de l'objet en mouvement, acquiert un temps d'arrivée du propre véhicule (81) en tant que temps jusqu'à ce que le propre véhicule (81) arrive au point d'intersection sur la base de la vitesse du propre véhicule (81), acquiert un temps d'arrivée de l'objet en mouvement en tant que temps jusqu'à ce que l'objet en mouvement arrive au point d'intersection, sur la base d'une vitesse de mouvement actuelle de l'objet en mouvement jusqu'à l'instant du changement d'environnement et sur la base de la vitesse maximale après l'instant du changement d'environnement, calcule une différence de temps d'arrivée en tant que différence entre temps d'arrivée du propre véhicule (81) et temps d'arrivée de l'objet en mouvement, et prédit une collision du propre véhicule (81) et de l'objet en mouvement et établit un plan de déplacement lorsque la différence des temps d'arrivée est égale ou inférieure à une valeur prédéterminée.

9. Dispositif de commande de déplacement de véhicule selon la revendication 8, dans lequel
lorsque la différence des temps d'arrivée, calculée dans un état dans lequel il est prédit que l'objet en mouvement maintiendra une vitesse actuelle, est égale ou inférieure à la valeur prédéterminée et la différence des temps d'arrivée calculée en tenant compte d'une prédiction d'augmentation de vitesse de l'objet en mouvement sur la base de l'unité de prédiction de changement de vitesse est égale ou supérieure à la valeur prédéterminée, l'unité de plan de déplacement (40) prédit que l'objet en mouvement maintiendra la vitesse actuelle après le changement d'environnement contre l'unité de prédiction de changement de vitesse (39) et établit le plan de déplacement.

# FIG. 1

# FIG. 2

# FIG. 3

t=$T_0$: CHANGE FROM
RED TO BLUE

Δt: BLUE DISPLAY TIME

⇩

t=$T_0$+Δt: CHANGE
PREDICTION
FROM BLUE

83

80

t=$t_0$

81

*FIG. 4*

1

30

40 — TRAVELLING PLAN UNIT

41 — COMMAND VALUE OPERATION UNIT

31 — OWN VEHICLE INFORMATION

32 — ROAD INFORMATION

33 — MOVING OBJECT INFORMATION

34 — SIGNAL INFORMATION

35 — TARGET TRAVELLING TRACK GENERATION UNIT

36 — TRACK INTERSECTION DETERMINATION UNIT

37 — MAXIMUM SPEED ESTIMATION UNIT

38 — ENVIRONMENT CHANGE PREDICTION UNIT

39 — SPEED CHANGE PREDICTION UNIT

FIG. 5

## FIG. 6

START

GENERATE TARGET TRAVELLING TRACK ⟋S50

DETECT MOVING OBJECT ⟋S51

DOES TRACK INTERSECT WITH TRACK OF MOVING OBJECT? ⟋S52
— NO
— YES

[CURRENT SURROUNDING ENVIRONMENT RECOGNITION] ⟋S53
·CURRENT SIGNAL INFORMATION
·MOVING OBJECT ATTRIBUTE ·ROAD SHAPE
·POSITION RELATION WITH OTHER MOVING OBJECT
·FUTURE SIGNAL CHANGE
(ANTICIPATION BY CAMERA AND ACQUISITION BY COMMUNICATION)

PREDICT FUTURE ENVIRONMENT CHANGE ⟋S54

IS ENVIRONMENT CHANGE SPEED CHANGE FACTOR OF MOVING OBJECT? ⟋S55
— NO
— YES

ESTIMATE MAXIMUM SPEED OF MOVING OBJECT ⟋S61

DOES MOVING OBJECT ARRIVE AT AT LEAST PREDETERMINED RATIO OF ROAD WIDTH WHEN MOVING OBJECT MOVES AT MAXIMUM SPEED FROM ENVIRONMENT CHANGE POINT OF TIME? ⟋S62
— YES
— NO

INCREASE PREDICTION SPEED OF MOVING OBJECT ⟋S63

DECREASE PREDICTION SPEED OF MOVING OBJECT ⟋S64

IS THERE POSSIBILITY OF COLLISION? ⟋S71
— YES
— NO

CHANGE TRAVELLING PLAN ⟋S72

OPERATE COMMAND VALUE (RETURN) ⟋S73

*FIG. 7*

START

ACQUIRE TARGET
TRAVELLING TRACK — S101

GENERATE SPEED PLAN — S102

ACQUIRE SPEED PREDICTION
OF MOVING OBJECT — S103

CALCULATE ARRIVAL
TIME DIFFERENCE $\Delta$TTC — S104

IS $|\Delta$TTC$|$
EQUAL TO OR LARGER
THAN PREDETERMINED
VALUE? — S105

NO →

YES ↓

CALCULATE AVERAGE SPEED V'
WHERE $|\Delta$TTC$|$ BECOMES EQUAL
TO OR LARGER THAN
PREDETERMINED VALUE
$V' = L0/(T2+T\_)$ — S111

IS $|\Delta$TTC$|$
EQUAL TO OR LARGER
THAN PREDETERMINED
VALUE, FOR ALL MOVING
OBJECTS INTERSECTING
WITH TARGET
TRAVELLING
TRACK? — S112

NO →

YES ↓

MODIFY SPEED PLAN TO
BECOME AVERAGE SPEED V' — S113

DELIVER TRAVELLING PLAN
(RETURN)

# FIG. 8

t=t$_1$: BLUE SIGNAL FLICKERING START

86

EMERGENCY 85
BRAKING

84

83

t=T$_1$

t=T$_0$

81

ACTUAL ARRIVAL POSITION
AFTER SPEED CHANGE

ANTICIPATION ARRIVAL
POSITION AT TIME t=t$_0$

t=T$_1$, v=V$_{max}$

t=T$_0$, v=V$_0$

82

# FIG. 9

t=t₁: BLUE SIGNAL FLICKERING START

86

83   85

84

t=T₀' (>T₀)

81

t=T₁, v=Vmax

t=T₀, v=V₀

82

## FIG. 10A

MOVING OBJECT SPEED — $V_{max}$, $V_0$, ACTUALITY, PREDICTION, $T_0$, $T_1$, TIME t

OWN VEHICLE SPEED — EMERGENCY BRAKING, $T_0$, $T_1$, TIME t

## FIG. 10B

MOVING OBJECT SPEED — $V_{max}$, $V_0$, PREDICTION, ACTUALITY, $T_0$, $T_1$, TIME t

OWN VEHICLE SPEED — $T_0$, $T_1$, TIME t

# FIG. 11

t=T$_1$: RED DISPLAY

# FIG. 12

87

82

$t=T_0, v=V_0$

$t=T_1, v=V_{max}$

$t=T_1$: LEFT TURNING VEHICLE APPROACH

83

84

85

$t=T_0' (>T_0)$

86

81

# FIG. 13

CROSSING

88

t=T$_1$: CROSSING ALARM
RINGING START

83    85

84

t=T$_0$' (>T$_0$)

81

t=T$_1$, v=V$_{max}$

t=T$_0$, v=V$_0$

82

*FIG. 14*

```
                    ( START )
                        │
                        ▼
         ┌──────────────────────────┐  S101
         │    ACQUIRE TARGET        │
         │    TRAVELLING TRACK      │
         └──────────────────────────┘
                        │
                        ▼
         ┌──────────────────────────┐  S102
         │    GENERATE SPEED PLAN    │
         └──────────────────────────┘
                        │
                        ▼
         ┌──────────────────────────┐  S103
         │  ACQUIRE SPEED PREDICTION │
         │    OF MOVING OBJECT       │
         └──────────────────────────┘
                        │
                        ▼
         ┌──────────────────────────┐  S104
         │    CALCULATE ARRIVAL      │
         │    TIME DIFFERENCE ΔTTC   │
         └──────────────────────────┘
                        │
                        ▼
```

S105 — IS |ΔTTC| EQUAL TO OR LARGER THAN PREDETERMINED VALUE? — NO / YES

S121 — CALCULATE ARRIVAL TIME DIFFERENCE ΔTTC AT CURRENT SPEED OF MOVING OBJECT

S122 — IS |ΔTTC| EQUAL TO OR LARGER THAN PREDETERMINED VALUE? — NO / YES

S111 — CALCULATE AVERAGE SPEED V' WHERE |ΔTTC| BECOMES EQUAL TO OR LARGER THAN PREDETERMINED VALUE
$$V' = L0/(T2 + T\_)$$

S112 — IS |ΔTTC| EQUAL TO OR LARGER THAN PREDETERMINED VALUE, FOR ALL MOVING OBJECTS INTERSECTING WITH TARGET TRAVELLING TRACK? — NO / YES

S113 — MODIFY SPEED PLAN TO BECOME AVERAGE SPEED V'

DELIVER TRAVELLING PLAN (RETURN)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014093040 A

- JP 4967015 B